# EUROPEAN PATENT APPLICATION

(11) **EP 4 789 523 A1**
(43) Date of publication of application: **12.08.2026**
(21) Application number: 26156542.8
(22) Date of filing: 05.02.2026
(51) Int. Cl.: A01B 69/04, A01D 34/00

(54) **GARDENING ROBOT AND RELATED CONTROL METHOD**

(30) Priority: 11.02.2025 IT 202500002586
(71) Applicant: Emak S.p.A., 42011 Bagnolo in Piano (Reggio Emilia) (IT)
(72) Inventor: BARBOLINI, Gianluca, 41122 MODENA (IT)
(74) Representative: Rausa, Mario Alberto Manlio

(57) **Abstract**

A gardening robot (100) is described, comprising: supporting members (110) adapted to stand on and in contact with the ground, at least one soil-working tool (105), a motor (115) adapted to drive one or more of said supporting members (110), to cause a movement of the robot (100) on the ground, a sensor system (125) adapted to pick up a signal emitted by a boundary cable (500) arranged along at least a portion of a boundary of a work area (A) of the robot (100), and an electronic control unit (120) connected with the sensor system (125) and configured to measure, based on the signal picked up by the sensor system (125), a distance of the robot (100) with respect to the boundary cable (500), adjust a movement speed of the robot (100) on the ground, so as to reduce said speed as the measured distance decreases.

## Description

### Technical Field

The present invention relates to a gardening robot, such as a robot mower.

### State of the art

As is well known, a robot mower is a self-propelled device equipped with a cutting tool, e.g. a disc or a rotating plate with blades or other cutting edges, which is intended to cut (mow) the grass growing on the ground, within a predefined work area.

To delimit the work area in which the robot is to operate, some models involve the use of a boundary cable (or wire), which can be buried below the ground surface.

This boundary cable, typically made of conductive material, is connected to a control unit, which is designed to apply an electrical signal to the boundary cable, i.e. a time-varying electrical voltage, e.g. an alternating voltage.

Being traversed by this electrical signal, the boundary cable generates and emits (basically like an antenna) a corresponding magnetic signal, i.e. a time-varying magnetic field, e.g. an alternating magnetic field, which can be detected by a set of inductive sensors placed on board the robot mower.

As long as the response of the sensors to this magnetic signal has certain characteristics, e.g. as long as the electric voltage induced by the magnetic signal in the inductive sensors has a certain sign (e.g. positive), it means that the robot mower is within the work area in which it actually has to operate.

Under these conditions, the robot mower can continue to move along the trajectory provided by its navigation logic, generally at a constant, predefined speed.

If the response of at least one of the sensors changes, e.g. if the voltage induced by the magnetic signal in at least one of the inductive sensors reverses its sign (e.g. becomes negative), it means that this sensor has crossed the boundary cable, from which it follows that the robot mower is at the limit of the work area.

In this case, the robot mower is configured to automatically change direction, moving away from the boundary cable towards the inside of the work area.

However, it may happen, e.g. when the ground is sloping or due to a loss of grip, that the robot mower is unable to change direction before completely overshooting the boundary cable, and therefore that the response of all its sensors to the magnetic signal changes from the expected one, e.g. the voltage induced by the magnetic signal in all the inductive sensors takes on the opposite sign (e.g. negative).

In such a circumstance, the robot mower is generally configured to stop and possibly trigger an alarm, waiting for an operator to manually bring it back into the work area.

It is clear, however, that circumstances such as these are not only a nuisance for operators, but also, in the event of their temporary unavailability, a reason for prolonged periods of inactivity of the robot mower, thus compromising its efficiency.

### Disclosure of the invention

In the light of the above, an object of the present invention is to provide a solution to reduce the possibility of a robot mower, or more generally any gardening robot, going entirely beyond the boundary cable that delimits its work area.

Another object is to achieve the aforesaid objective within the context of a simple, rational and relatively cost effective solution.

These and other objects are achieved thanks to the characteristics of the invention as set forth in the independent claims. The dependent claims outline preferred and/or particularly advantageous aspects of the invention but not strictly necessary for implementing it. In particular, an embodiment of the present invention makes available a gardening robot, for example a robot mower, comprising:
- supporting members adapted to stand on and in contact with the ground, e.g. a plurality of wheels,
- at least one soil-working tool, e.g. a rotary cutting tool,
- a motor, preferably an electric motor, adapted to drive one or more of said supporting members, to cause movement of the robot on the ground,
- a sensor system, e.g. of the inductive type, adapted to pick up a signal, e.g. a magnetic signal, emitted by a boundary cable arranged along at least a portion of a boundary of a work area of the robot, and
- an electronic control unit connected to the sensor system and configured for:
   o measuring, based on the signal picked up by the sensor system, a distance of the robot from the boundary cable,
   o adjusting, e.g. by means of a motor control, a speed of the robot's movement on the ground, so as to reduce said speed as the measured distance decreases.

By reducing the speed as the robot approaches the boundary cable, its momentum is also advantageously reduced, making it easier and quicker to stop and/or change direction, thus positively and consequently reducing the possibility that the robot may entirely cross over the boundary cable.

According to an embodiment of the invention, speed adjustment could provide that the electronic control unit is configured for:
o making the robot move at a first speed value, if the measured distance is greater than or equal to a first threshold value, and
o making the robot move at a second speed value, lower than the first value, if the measured distance is less than the first threshold value.

This embodiment has the advantage of being extremely simple and easy to implement. This could then be refined by adding additional distance threshold values and corresponding speed values, so as to achieve speed adjustment by discrete steps.

In practice, speed adjustment could further require the electronic control unit to be configured for:
o making the robot move at the second speed value, if the measured distance is equal to a second threshold value, less than the first threshold value, or between the second threshold value and the first threshold value, and
o making the robot move at a third speed value, less than the second value, if the measured distance is less than the second threshold value.

Eventually, the adjustment could then provide for the electronic unit to be configured for:
o making the robot move at the third speed value, if the measured distance is equal to a third threshold value, less than the second threshold value, or between the third threshold value and the second threshold value, and
o making the robot move at a fourth speed value, less than the third value, if the measured distance is less than the third threshold value.

And so on, until achieving speed adjustment in discrete steps with any number of steps, preferably no more than ten.

Of course, all the distance thresholds and speed values mentioned above can be pre-set and stored in the electronic control unit (or in an associated memory), so as to reduce the computational load required to adjust the robot's speed.

According to another embodiment of the invention, the speed adjustment could alternatively provide that the electronic control unit is configured to vary the speed of the robot directly proportionally to the measured distance.

The (direct) proportionality relationship can be linear, parabolic or any other type, but it still has the advantage that, for every decrease in distance from the boundary cable, there is always a decrease in speed, in a very gradual and regular manner.

In order to reduce the computational load involved in this control activity, it is however possible, also in this context, to introduce threshold values for the distance of the robot from the boundary cable, e.g. maximum and/or minimum threshold values within which the aforementioned (directly) proportional adjustment is to be performed.

In particular, an aspect of this embodiment of the invention may provide that the electronic control unit is configured to disable the (directly proportional) speed adjustment if the measured distance is greater than a maximum threshold value (preferably pre-set).

In this way, as long as the measured distance is less than or equal to said maximum threshold value, the robot's speed is effectively adjusted in a manner that is (directly) proportional to the measured distance, while above said maximum threshold value, the speed can be kept constant, e.g. equal to a pre-set value (e.g. a maximum value) or possibly adjusted according to other logics.

In addition or alternatively, another aspect of this embodiment may be that the electronic control unit is configured to disable (directly proportional) speed adjustment, if the measured distance is less than a minimum threshold value, which may be less than the aforementioned maximum threshold value (if any).

In this way, as long as the measured distance is greater than or equal to said minimum threshold value, the robot's speed is effectively adjusted in a manner that is (directly) proportional to the measured distance, while below said minimum threshold value, the speed can be kept constant, e.g. equal to a pre-set value (e.g. a minimum value lower than the maximum value mentioned above) or possibly adjusted according to other logics. Thanks to these solutions, it is advantageously possible to reduce the computational load involved in adjusting the robot's speed, if the robot is so far from the boundary cable that there is no risk of overshooting, and/or so close to the boundary cable that any change in speed would be essentially irrelevant.

In addition to the gardening robot outlined above, the invention naturally also makes available an apparatus for automatically performing gardening tasks which, in addition to said gardening robot, also comprises a boundary cable adapted to be arranged along at least a portion of a boundary of a work area of the robot, and an electrical and/or electronic control unit connected to the boundary cable and configured to apply an electrical signal to the latter to generate a magnetic signal.

By taking advantage of the speed control implemented on the robot, this embodiment of the invention achieves essentially the same benefits as mentioned above, in particular that of reducing the possibility of the robot overshooting the boundary cable entirely. The invention further provides a method for controlling a gardening robot, wherein the robot comprises supporting members adapted to stand on and in contact with the ground, for example a plurality of wheels, at least one soil working tool, for example a rotary cutting tool, and a motor, preferably an electric motor, adapted to drive one or more of said supporting members, to cause a movement of the robot on the ground, and wherein the method provides for:
- picking up a signal emitted by a boundary cable placed along at least a portion of a boundary of a work area of the robot,
- measuring, based on the signal picked up, a distance of the robot from the boundary cable,
- adjusting, e.g. by means of a motor control, a speed of the robot's movement on the ground, so as to reduce the speed as the measured distance decreases.

This embodiment of the invention also, of course, achieves essentially the same advantages as the gardening robot outlined above, in particular that of reducing the possibility of the robot entirely crossing over the boundary cable.

All the ancillary features described above with reference to the gardening robot are understood to apply, *mutatis mutandis,* to the corresponding control method.

Thus, for example, speed adjustment could involve:
o making the robot move at a first speed value, if the measured distance is greater than or equal to a first threshold value, and
o making the robot move at a second speed value, lower than the first value, if the measured distance is less than the first threshold value.

This adjustment could then be refined by adding additional threshold values and corresponding speed values, so as to achieve speed adjustment by discrete steps.

In practice, speed adjustment could further provide for:
o making the robot move at the second speed value, if the measured distance is equal to a second threshold value, less than the first threshold value, or between the second threshold value and the first threshold value, and
o making the robot move at a third speed value, less than the second value, if the measured distance is less than the second threshold value.

If necessary, the adjustment could then provide for:
o making the robot move at the third speed value, if the measured distance is equal to a third threshold value, less than the second threshold value, or between the third threshold value and the second threshold value, and
o making the robot move at a fourth speed value, less than the third value, if the measured distance is less than the third threshold value.

And so on, until achieving speed adjustment in discrete steps with any number of steps, preferably no more than ten.

Of course, all the distance thresholds and speed values mentioned above can be pre-set or predetermined.

Alternatively, the speed adjustment could involve varying the robot's speed directly proportionally to the measured distance.

In this case, the method could also involve disabling the (directly proportional) speed adjustment if the measured distance is greater than a maximum threshold value (preferably pre-set).

In addition or alternatively, the method could provide for disabling (directly proportional) speed adjustment, if the measured distance is less than a minimum threshold value, which may be less than the aforementioned maximum threshold value (if any).

In accordance with the present invention, the method may be performed with the aid of a computer program comprising software code for performing all the steps of the method described above, and in the form of a computer medium on which said computer program is stored. The computer medium, which may be transient or non-transitory in nature, may for example be a fixed or portable memory drive, a CD-ROM, a DVD-ROM or any other medium readable by a computer. The method can also be implemented as a modulated electromagnetic signal to carry a sequence of data bits representing the computer program to perform all the steps of the method.

### Brief description of the drawings

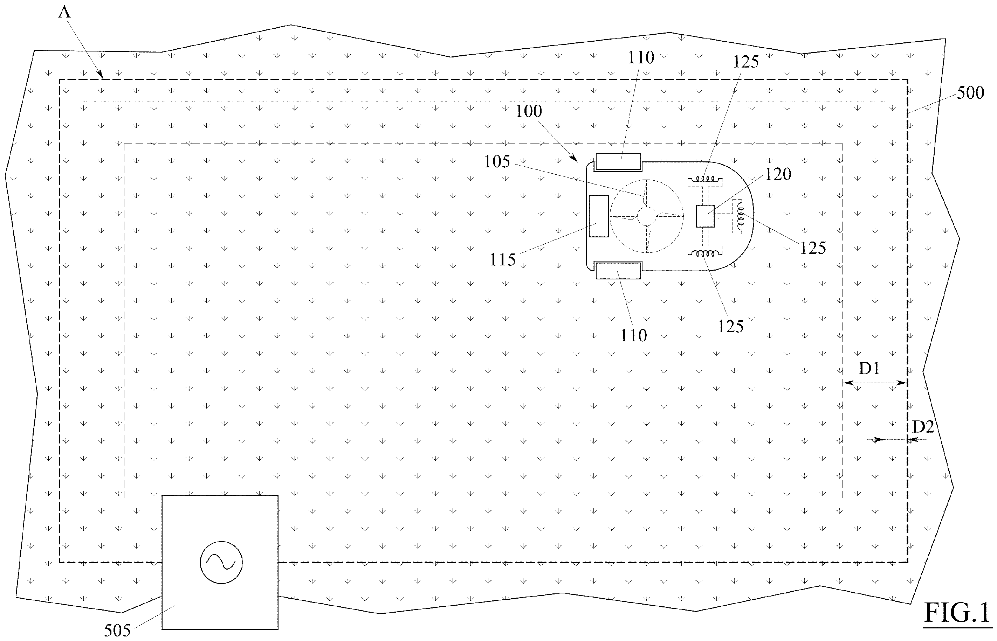

Further features and advantages of the invention will be apparent from reading the following description, which is provided by way of example only and not by way of limitation, with the aid of the accompanying table, in which a single figure is shown as Figure 1.

Figure 1 schematically shows a plan view of an apparatus for automatically performing gardening tasks, in this case mowing grass, according to a embodiment of the present invention.

### Detailed description

A gardening robot 100 according to the present discussion, an example of which is illustrated in Figure 1 above, may in particular be a so-called robot mower, i.e. a robot designed to cut/mow grass growing on a piece of land.

However, it cannot be ruled out that, in other embodiments, the robot 100 may be assigned to perform other operations, such as reaping, hoeing, tilling or the like.

The robot 100 essentially consists of a self-propelled device equipped with at least one soil-working tool 105, e.g. a mowing tool, reaping device, tiller or the like.

In the example illustrated, wherein the robot 100 is a lawn mower, the tool 105 may comprise either a disc or a rotating plate with blades or other cutting edges.

In general, however, the tool 105 is preferably a tool that not only moves together with the robot 100, but also has a relative movement (e.g. rotary, reciprocating, etc.) with respect to it.

Being a self-propelled device, the robot 100 is generally provided with supporting members 110 adapted to stand on and in contact with the ground, and at least one motor 115, preferably an electric motor, which is adapted to drive one or more of said supporting members 110, to cause the movement of the robot 100 on the ground.

In the example illustrated, the supporting members 110 are wheels but it is not excluded that, in some alternative embodiments, they may be tracks or the like.

In any case, the supporting members 110 can be mounted on a load-bearing structure (e.g. a chassis) of the robot 100, on which the motor 115 and the tool 105 are also installed.

The tool 105 can be driven (in its own relative motion) by the same motor 115 that also drives the supporting members 110 or by an independent motor, preferably an electric motor.

The motor 115 can be powered by an electric battery (not shown), which is also installed on board the robot 100, e.g. on the support structure mentioned above.

Preferably, the robot 100 is not intended to transport people (operators) and can therefore be relatively small.

The robot 100 comprises an electronic control unit 120, which is configured to control the advancement speed of the robot 100, e.g. by handling the operation of the motor 115. This electronic control unit 120, which is installed on board the robot 100 (e.g. on the robot's load-bearing structure), can also be configured to control a steering system (not shown) that allows the robot 100 to make directional changes.

This steering system may comprise, for example, one or more steering wheels, e.g. driven by a motor subject to the electronic control unit 120, or it may be implemented by means of mechanical devices and/or control strategies that allow the supporting members 110 to be driven (e.g. to rotate) at different speeds.

In any case, the steering system and, therefore, the trajectory followed by the robot 100 on the ground can be controlled by the electronic control unit 120, preferably on the basis of autonomous driving logic, i.e. without the need for external commands from an operator.

In particular, the electronic control unit 120 can be configured so that the robot 100 is constrained to move within a predetermined work area A, i.e. a predetermined portion of land.

Within this work area A, the robot 100 can move in an essentially random manner, for example by following rectilinear trajectories and changing direction when it is close to the edges of the work area A, so as not to cross them completely.

In order to delimit at least part (or all) of the work area A in which the robot 100 is to operate, the apparatus envisages the use of a boundary cable (or wire) 500, which can be buried (generally at a shallow depth, e.g. 5-20 cm) below the surface of the ground. This boundary cable 500, typically made of conductive material, is connected with an electrical/electronic control unit 505, which can also serve as a charging base for the robot 100.

The control unit 505 is adapted to apply an electrical signal to the boundary cable 500, i.e. a time-varying electrical voltage, e.g. an alternating electrical voltage, preferably low voltage and/or low frequency.

Being traversed by this electrical signal, the boundary cable 500 generates and emits (basically like an antenna) a corresponding magnetic signal, i.e. a time-varying magnetic field, e.g. an alternating magnetic field.

This magnetic signal can be picked up by one or more sensors 125, e.g. of the inductive type, which are installed on board the robot 100, e.g. on its load-bearing structure, and are connected to the electronic control unit 120.

For example, each sensor 125 may comprise at least one electrical winding configured so that the magnetic signal generated by the boundary cable 500 induces a corresponding electrical voltage on it, typically a time-varying voltage.

The electronic control unit 120 can be configured to recognise that the robot 100 is within the work area A, as long as the response of all the sensors 125 to the magnetic signal exhibits at least one certain common characteristic, for example as long as the electrical voltage induced in all the sensors 125 exhibits the same sign (e.g. positive).

Under these conditions, the electronic control unit 120 can then be configured to control the robot 100 so that it continues to move along the trajectory envisaged by its navigation logic, for example along a substantially straight direction.

However, when one of the sensors 125 installed on the robot 100 crosses the boundary cable 500, the response of that sensor 125 to the magnetic signal changes, e.g. the voltage induced in that sensor 125 by the magnetic signal reverses its sign (e.g. it becomes negative).

In this condition, i.e. when it senses that the response of at least one of the sensors 125 has changed, the electronic control unit 120 can be configured to automatically stop and/or change the direction of the robot 100, causing the latter to move away from the boundary cable 500 towards the inside of the work area A.

If it happens that the response of all the sensors 125 to the magnetic signal simultaneously differs from what is expected, e.g. the voltage induced by the magnetic signal in all the sensors 125 is of the opposite sign (e.g. negative), this means that, for some reason, the robot 100 has left the work area A.

In this case, the electronic control unit 120 can be configured to stop the robot 100 and, if necessary, to trigger an alarm so that an operator can manually bring the robot 100 back inside the work area A.

In order to reduce the possibility of events such as this occurring, the present invention provides that, at least as long as the robot 100 is in the work area A, the electronic control unit 120 is configured to measure, on the basis of the magnetic signal emitted by the boundary cable 500 and picked up by the sensors 125, a distance of the robot 100 from the boundary cable 500.

Of course, this measurement can be a direct measurement but, more often, it can be an indirect measurement, i.e. the measurement of a different but related quantity.

For example, the voltage induced in the sensors 125 (if they are inductive) depends on the intensity of the magnetic signal, which decreases with increasing distance from the source, in this case with increasing distance from the boundary cable 500.

Therefore, the value (voltage) of the electrical voltage induced in sensors 125 (if inductive) is an indirect measure of the distance of the sensors 125, hence of the robot 100, from the boundary cable 500.

The lower the value of the induced voltage, i.e. the intensity of the magnetic signal picked up, the greater the distance of the robot 100 from the boundary cable 500, and vice versa. In the present discussion, reference is therefore made to measurements and values (e.g. threshold values) of the distance between the robot 100 and the boundary cable 500, which means measurements and values of any quantity measurable by the sensors 125 and indicative of this distance, for example measurements and values of the magnetic signal strength and/or measurements and values of the voltage induced in the sensors 125.

Distance is also preferably understood as a minimum distance, i.e. the distance separating the robot 100 from the proximal (closest) section of the boundary cable 500.

More precisely, if the robot 100 were equipped with a sensor system comprising a single sensor 125, this distance could correspond to the distance between said proximal section of the boundary cable 500 and said sensor 125, measured, for example, in terms of the value of the voltage induced in it by the magnetic signal.

In the event that the robot 100 is equipped, as in the example illustrated, with a sensor system comprising more than one sensor 125, this distance could correspond to the distance between the aforementioned proximal section of the boundary cable 500 and the sensor 125 closest to it, for example by considering the instantaneously higher voltage value induced by the magnetic signal in the various sensors 125 of the system.

Or it could be calculated on the basis of calculating the distances of said proximal section of the boundary cable 500 with respect to all the sensors 125 in the system, e.g. by calculating (e.g. an average) of the voltage values which are simultaneously induced by the magnetic signal in the various sensors 125.

That being said, in addition to measuring (on the basis of the magnetic signal picked up by the sensors 125) the distance of the robot 100 from the boundary cable 500, the invention provides that the electronic control unit 120 is configured to adjust a movement speed of the robot 100 on the ground, so as to reduce said speed as the measured distance decreases.

Speed adjustment means that the electronic control unit 120 actively intervenes to reduce the actual speed of the robot 100 as the distance decreases.

To achieve this effect, the electronic control unit 120 can act directly on the motor 115, e.g. by varying its electrical supply parameters (e.g. amplitude and/or frequency of the supply voltage).

However, it is not excluded that, in other embodiments, the electronic control unit 120 may act on a braking system of the robot 100 or any other system having a direct impact on the actual speed.

In any case, by reducing the speed as the robot 100 approaches the boundary cable 500, its momentum is also advantageously reduced, making it easier and quicker to stop and/or change direction, thus reducing the possibility that the robot 100 could entirely cross over the boundary cable 500.

In order to carry out this adjustment, a possible embodiment of the invention simply provides that the electronic control unit 120 is configured to make the robot 100 move at a first value V1 of the speed, if the measured distance is greater than or equal to a first threshold value D1, and to make the robot 100 move at a second value V2 of the speed, if the measured distance is less than the first threshold value D1, wherein the second value of the speed V2 is naturally less than the first V1 (V2<V1).

These values V1 and V2 of the speed, as well as the first threshold value D1 of the distance, can be established in a preliminary step of setting/calibrating the system and stored in the electronic control unit 120 (or in an associated memory).

An embodiment such as this has the advantage that it is extremely simple and easy to implement, and that it can be refined by adding additional distance threshold values and corresponding speed values, so as to achieve speed adjustment in discrete steps.

For example, a second distance threshold value D2 and a third speed value V3 could also be established (e.g. in the preliminary step and then stored as mentioned above), where the second distance threshold value D2 is lower than the first distance threshold value D1 (D2<D1), and wherein the third speed value V3 is lower than the second V2 (V3<V2).

The electronic control unit 120 could then be further configured to make the robot 100 move at the second speed value V2, if the measured distance is equal to the second threshold value D2 or between the second threshold value D2 and the first threshold value D1, and to make the robot 100 move at the third speed value V3, if the measured distance is also less than the second threshold value D2.

Possibly, a third distance threshold value D3 (not represented) and a fourth speed value V4 could also be established (e.g. in a preliminary step and then stored as mentioned above), wherein the third distance threshold value D3 is less than the second distance threshold value D2 (D3<D2), and wherein the fourth speed value V4 is less than the third speed value V3 (V4<V3); and the electronic control unit 120 could be further configured to make the robot 100 move at the third speed value V3, if the measured distance is equal to the third threshold value D3 or between the third threshold value D3 and the second threshold value D2, and to make the robot 100 move at the fourth speed value V4, if the measured distance is also less than the third threshold value D3.

And so on, until achieving speed adjustment in discrete steps with any number of steps, preferably no more than ten.

However, a preferred embodiment of the present invention provides that the electronic control unit 120 is configured to vary the speed of the robot 100 directly proportionally to the measured distance, e.g. according to a linear, parabolic or any other type of (direct) proportionality relationship.

In this way, every decrease in distance from the boundary cable 500 always corresponds to a decrease in speed (and vice versa, every increase in distance from the boundary cable 500 always corresponds to an increase in speed), in a very gradual and regular manner.

At least within certain limits.

Indeed, it is only possible for the electronic control unit 120 to be configured to perform the aforementioned (directly) proportional speed adjustment, if the measured distance of the robot 100 from the boundary cable 500 meets certain criteria with respect to, for example, maximum and/or minimum distance threshold values, whereby the maximum threshold value is naturally greater than the minimum.

These maximum and minimum threshold values, which in the diagram in Figure 1 can be represented by D1 (maximum threshold value) and D2 (minimum threshold value), can also be pre-determined, i.e. established and possibly stored in the electronic control unit 120 (or in one of its memories) during a preliminary setting/calibration step.

For example, the electronic control unit 120 can be configured to disable (directly proportional) speed adjustment of the robot 100 if the measured distance is greater than the maximum threshold value D1.

In this way, as long as the measured distance is less than or equal to said maximum threshold value D1, the speed of the robot 100 is effectively adjusted in a manner that is (directly) proportional to the measured distance, whereas above said maximum threshold value D1, the speed can be kept constant, e.g. equal to a pre-set value (e.g. a maximum value, equal to that assumed by the proportional control to the maximum distance D1) or possibly adjusted according to other logics.

Additionally or alternatively, the electronic control unit 120 can be configured to disable (directly proportional) speed adjustment if the measured distance is below the minimum threshold value D2.

In this way, as long as the measured distance is greater than or equal to said minimum threshold value D2, the speed of the robot 100 is effectively adjusted in a manner that is (directly) proportional to the measured distance, whereas below said minimum threshold value, the speed can be kept constant, e.g. equal to a pre-set value (e.g. a minimum value, lower than the maximum value mentioned above, e.g. equal to that assumed by the proportional control to the minimum distance D2 ) or possibly adjusted according to other logics.

It goes without saying that if both criteria are introduced, the speed of the robot 100 can only be adjusted in a manner that is (directly) proportional to the measured distance, for values of the measured distance between said maximum D1 and minimum D2 threshold values.

Obviously, a person skilled in the art can make several technical-applicative modifications without departing from the scope of the invention as hereinbelow claimed.

## Claims

1. A gardening robot (100), comprising:
- supporting members (110) adapted to stand on and in contact with the ground,
- at least one soil-working tool (105),
- a motor (115) adapted to drive one or more of said supporting members (110), to cause the robot (100) to move on the ground,
- a sensor system (125) adapted to pick up a signal emitted by a boundary cable (500) arranged along at least a portion of a boundary of a work area (A) of the robot (100), and
- an electronic control unit (120) connected to the sensor system (125) and configured for:
o measuring, based on the signal picked up by the sensor system (125), a distance of the robot (100) from the boundary cable (500),
o adjusting a movement speed of the robot (100) on the ground, so as to reduce said speed as the measured distance decreases.

2. A robot (100) according to claim 1, wherein the speed adjustment requires the electronic control unit (120) to be configured for:
o making the robot (100) move at a first speed value (V1), if the measured distance is greater than or equal to a first threshold value (D1), and
o making the robot (100) move at a second speed value (V2), lower than the first value (V1), if the measured distance is less than the first threshold value (D1).

3. A robot (100) according to claim 2, wherein the speed adjustment requires the electronic control unit (120) to be configured for:
o making the robot (100) move at the second speed value (V2), if the measured distance is equal to a second threshold value (D2), less than the first threshold value (D1), or between the second threshold value (D2) and the first threshold value (D1), and
o making the robot (100) move at a third speed value (V3), lower than the second value (V2), if the measured distance is less than the second threshold value (D2).

4. A robot (100) according to claim 1, wherein the speed adjustment requires the electronic control unit (120) to be configured for varying the speed of the robot (100) directly proportionally to the measured distance.

5. A robot (100) according to claim 4, wherein the electronic control unit (120) is configured to disable speed adjustment if the measured distance is greater than a maximum threshold value (D1).

6. A robot (100) according to claim 4 or 5, wherein the electronic control unit (120) is configured to disable speed adjustment if the measured distance is less than a minimum threshold value (D2).

7. An apparatus for the automatic implementation of gardening tasks, comprising:
- a robot (100) according to any one of the preceding claims,
- a boundary cable (500) adapted to be arranged along at least a portion of a boundary of a work area (A) of the robot (100), and
- an electrical and/or electronic control unit (505) connected to the boundary cable (500) and configured to apply an electrical signal to the latter to generate a magnetic signal.

8. A method for controlling a gardening robot (100), wherein the robot comprises supporting members (110) adapted to stand on and in contact with the ground, at least one soil-working tool (105), and a motor (115) adapted to drive one or more of said supporting members (110), to cause a movement of the robot (100) on the ground, and wherein the method comprises:
- picking up a signal emitted by a boundary cable (500) placed along at least a portion of a boundary of a work area (A) of the robot (100),
- measuring, based on the signal picked up, a distance of the robot (100) from the boundary cable (500),
- adjusting a movement speed of the robot (100) on the ground, so as to reduce the speed as the measured distance decreases.

9. A computer program comprising software code for performing all the steps of the method according to claim 8.

10. A computer medium on which the computer program of claim 9 is stored.
